Europäisches Patentamt

European Patent Office

Office européen des brevets

(19)

(11) Numéro de publication: **0 083 263 B1**

(12) **FASCICULE DE BREVET EUROPEEN**

(45) Date de publication du fascicule du brevet: **15.07.87**

(51) Int. Cl.⁴: **C 23 C 22/12, F 24 J 2/48**

(21) Numéro de dépôt: **82402283.4**

(22) Date de dépôt: **14.12.82**

(54) **Procédé d'élaboration d'un revêtement noir à la surface de pièces dont au moins une face est en zinc.**

(30) Priorité: **30.12.81 FR 8124487**

(43) Date de publication de la demande:
**06.07.83 Bulletin 83/27**

(45) Mention de la délivrance du brevet:
**15.07.87 Bulletin 87/29**

(84) Etats contractants désignés:
**AT BE CH DE GB IT LI LU NL SE**

(56) Documents cités:
**DE - A - 2 150 143**
**FR - A - 1 092 299**
**GB - A - 386 739**
**GB - A - 1 587 615**
**US - A - 3 647 568**

**SOLAR ENERGY, vol. 23, no. 5, 1979, pages 405-407, Pergamon Press, Ltd., Oxford, GB P.K. GOGNA et al: "Selective black nickel coatings on zinc surfaces by chemical conversion"**
**Die Phosphatierung von Metallen, W.Rausch / 1974, S.102**

(73) Titulaire: **Asturienne France, 42 Avenue Gabriel, Paris 8-ème (FR)**

(72) Inventeur: **Collard, Maurice, 995 rue Pierre Lembrez, F-59194 Raches (FR)**
Inventeur: **Cailleret, Henri, 1 rue Félix Collignon, F-59950 Auby (FR)**
Inventeur: **Bricout, Georges, Résidence Pasteur Apt. 103 251 boulevard Pasteur, F-59500 Douai (FR)**

(74) Mandataire: **CABINET BONNET-THIRION, 95 Boulevard Beaumarchais, F-75003 Paris (FR)**

ACTORUM AG

## Description

L'invention a trait à un procédé d'élaboration d'un revêtement noir sur au moins une face de pièces métalliques, notamment panneaux, cette face étant formée de zinc pur ou allié.

L'invention a vu le jour dans le cadre de recherches d'améliorations de capteurs solaires. Ceux-ci sont, actuellement, très généralement constitués par des panneaux en métal peu corrodable, tel qu'acier inoxydable, cuivre ou aluminium, munis d'un circuit de fluide caloporteur, et présentant au rayonnement solaire une surface portant un recouvrement noir (c'est-à-dire absorbant pour les rayonnements). Le coefficient d'absorption du recouvrement, dans la gamme des longueurs d'ondes énergétiques du rayonnement solaire et l'impédance thermique entre ce recouvrement et le circuit de fluide caloporteur déterminent le rendement du capteur, en fonction de la densité de rayonnement reçue et de la température du fluide caloporteur, et par voie de conséquence les conditions dans lesquelles le rendement s'annule, et donc la durée d'efficacité du capteur solaire dans les cycles diurnes et saisonniers. Or les besoins en énergie, que doivent satisfaire les capteurs solaires, sont importants surtout lorsque la densité de rayonnement solaire est faible, de sorte que des améliorations, à première vue de peu d'importance, sur le coefficient d'absorption du revêtement, actuellement souvent compris entre 0,9 et 0,95, et l'impédance thermique entre revêtement et fluide caloporteur, peuvent se révéler finalement d'intérêt majeur. Par ailleurs, la solution couramment utilisée d'un revêtement de peinture noir mat sur aluminium ou cuivre présente une impédance thermique relativement élevée malgré l'utilisation de métaux bons conducteurs, cette impédance se situant dans l'épaisseur de la peinture et à l'interface entre la peinture et le métal sous-jacent.

Comme la galvanisation de l'acier est destinée à conférer à ce métal une résistance à la corrosion correspondant sensiblement à celle qui est requise pour des capteurs solaires, la demanderesse a cherché à mettre au point un procédé d'élaboration d'un revêtement noir adhérant au zinc, à coefficient d'absorption supérieur à 0,95, en soi bon conducteur de la chaleur et formant une impédance thermique d'interface faible avec la couche de zinc de galvanisation. L'adhérence au zinc et l'impédance thermique d'interface faible, en condition conjointes, impliquent presque nécessairement une liaison du revêtement sur le zinc qui fasse intervenir les propriétés spécifiques du zinc; en corollaire le procédé sera efficace sur toute pièce présentant une face en zinc, que la pièce soit en zinc massif, ou en un métal quelconque masqué par la couche de zinc.

Aussi l'invention propose un procédé d'élaboration d'un revêtement noir sur au moins une face de pièces métalliques, notamment panneaux, cette face étant formée de zinc pur ou allié, caractérisé en ce qu'on forme un revêtement noir à base de cuivre et de phosphate en mettant en contact ladite face, à une température comprise entre l'ambiante et 75 °C et pendant une durée comprise entre 120 et 5 secondes, avec une solution aqueuse contenant de 3 à 25 g/l d'ions cuivriques, de 5 à 25 g/l d'ions zinc, de 1 à 20 g/l d'ions nickel, de 15 à 40 g/l d'ions orthophosphoriques, et éventuellement des anions non susceptibles de former des sels insolubles avec les ions métalliques précités, le pH de la solution étant compris entre 1,6 et 3,0, et on nettoie la pièce après la fin de la durée de contact.

Au contact entre le zinc de la face et la solution contenant, à pH faible, des ions cuivriques, il se produit une réaction d'oxydo-réduction, dite couramment cémentation, donnant un précipité de cuivre sur le zinc attaqué. Ce précipité constitue une couche poreuse de fins cristaux à orientation aléatoire, très proche d'un corps noir (coefficient d'absorption 0,95–0,97). Par ailleurs les ions phosphoriques, en présence d'ions zinc, forment à la surface du zinc une couche de phosphatation qui fixe la couche de cuivre cémenté. Les ions nickel favorisent, de façon connue notamment en technique de phosphatation, l'attaque régulière de la face de zinc, en accélérant et régularisant la phosphatation du zinc.

De préférence le nettoyage de la pièce est exécuté par lavage pour éliminer des traces résiduelles de solution, séchage puis brossage pour éliminer des particules mal fixées sur la face de la pièce.

On choisira la durée et la température de contact en tenant compte de ce que, plus la température de réaction est élevée, plus la vitesse de réaction est grande. On admettra que la durée de contact est réduite de moitié par une élévation de température comprise entre 8 et 16 °C.

De préférence la solution contiendra de 5 à 18 g/l d'ions cuivriques, de 8 à 9,5 g/l d'ions zinc, de 4 à 8,5 g/l d'ions nickel et de 20 à 30 g/l d'ions orthophosphoriques, le pH étant compris entre 1,8 et 2,4. Plus particulièrement la teneur en ions cuivriques sera comprise entre 11 et 14 g/l, la teneur en ions nickel entre 6,5 et 8,5 g/l et le pH entre 1,8 et 2,2.

Les caractéristiques et avantages de l'invention ressortiront d'ailleurs de la description qui va suivre, assortie d'exemples.

EXEMPLE I. Préparation d'une solution de noircissement: pour 10 litres.

Dans 8 litres d'eau désionisée on disperse 107 g d'oxyde de zinc, puis on ajoute de l'acide orthophosphorique ($H_3PO_4$) en agitant jusqu'à dissolution complète de l'oxyde de zinc. On ajoute ensuite 500 g de sulfate de cuivre pentahydraté ($CuSO_4 \cdot 5H_2O$) et 300 g de chlorure de nickel hexahydraté ($NiCl_2 \cdot 6H_2O$); on complète le volume à 10 litres par ajout d'eau désionisée, et on ajuste le pH à 2,0 par ajout d'acide orthophosphorique; la quantité total d'acide orthophosphorique utilisée est voisine de 200 ml. La solution ainsi constituée est filtrée.

Le calcul donne les teneurs suivantes:

| | |
|---|---|
| $Cu^{2+}$ | 12,7 g/l |
| $Zn^{2+}$ | 8,6 g/l |

| | |
|---|---|
| Ni$^{2+}$ | 7,4 g/l |
| PO$_4$$^{3-}$ | 30 g/l |
| SO$_4$$^{2-}$ | 19,5 g/l |
| Cl$^-$ | 9,0 g/l |

EXEMPLE II. Préparation d'une solution de noircissement: pour 20 litres.

Dans 18 litres d'eau désionisée on disperse 400 g de phosphate de zinc tétrahydraté [Zn$_3$(PO$_4$)$_2$·4H$_2$O], et on ajoute de l'acide orthophosphorique jusqu'à dissolution du phosphate de zinc. On dissout ensuite 1 400 g de sulfate de cuivre pentahydraté (CuSO$_4$·5H$_2$O) et 800 g de sulfate de nickel heptahydraté (NiSO$_4$·7H$_2$O). On complète à 20 litres avec de l'eau désionisée, et on ajuste le pH vers 2,3 par addition de la quantité suffisante d'acide orthophosphorique (la quantité totale utilisée est de l'ordre de 200 ml). La solution est filtrée. Le calcul donne les teneurs suivantes:

| | |
|---|---|
| Cu$^{2+}$ | 17,8 g/l |
| Zn$^{2+}$ | 8,57 g/l |
| Ni$^{2+}$ | 8,35 g/l |
| PO$_4$$^{3-}$ | 18,15 g/l |
| SO$_4$$^{2-}$ | 40,6 g/l |

EXEMPLE III. Préparation d'une solution de noircissement: pour 20 litres.

La solution est préparée comme dans l'exemple II, avec les quantités de réactifs suivantes: phosphate de zinc tétrahydraté: 400 g, sulfate de nickel heptahydraté: 400 g, sulfate de cuivre pentahydraté: 250 g, la quantité totale d'acide phosphorique (d = 1,7) étant voisine de 275 ml (468 g) pour un pH de 2,4.

Les teneurs calculées sont:

| | |
|---|---|
| Cu$^{2+}$ | 3,18 g/l |
| Zn$^{2+}$ | 8,57 g/l |
| Ni$^{2+}$ | 4,18 g/l |
| PO$_4$$^{3-}$ | 23,44 g/l |
| SO$_4$$^{2-}$ | 11,63 g/l |

Les solutions préparées suivant les exemples précédents ont des comportements très voisins sur des feuilles de zinc immergées dans ces solutions à une température de 20 °C pendant une durée de 90 secondes. La couche de dépôt noir présente une épaisseur d'environ 10 μm, et le coefficient d'absorption avoisine 0,97.

De nombreux essais de composition de solutions de noircissement ont été effectués, qui ont fait ressortir que les teneurs des constituants pouvaient varier dans de larges limites sans que les propriétés d'absorption du revêtement noir soient altérées. Ainsi la teneur en ions cuivriques peut varier de 3 à 25 g/l, la teneur en ions zinc entre 5 et 25 g/l, la teneur en ions nickel entre 1 et 20 g/l, la teneur en ions orthophosphoriques entre 15 et 40 g/l, tandis que le pH pouvait varier entre 1,6 et 3,0. On notera que les teneurs en ions Cl$^-$ ou SO$_4$$^{2-}$ sont pratiquement quelconques, compte tenu de ce que ces ions proviennent de sels de cuivre et nickel. Il est par ailleurs clair que ces anions, qui ne participent pas aux réactions, sont choisis pour leur commodité d'emploi comme sels solubles et ne donnent pas de précipités avec les cations présents, et leur disponibilité.

Les essais ont ensuite porté sur les conditions d'emploi des solutions de noircissement, mode d'application, durée et température de contact.

On a constaté que par immersion et par aspersion les résultats étaient sensiblement équivalents, avec des épaisseurs de recouvrement comprises entre 5 et 10 μm; ces modes d'application correspondent à des travaux de série. On a également obtenu des résultats satisfaisants, avec toutefois des épaisseurs moindres de revêtement, en appliquant les solutions par pulvérisation (pistolet) ou à la brosse, processus utilisables pour des travaux à l'unité ou sur des pièces de formes complexes.

Bien entendu, comme toutes les réactions électrochimiques, les vitesses de réaction croissent exponentiellement avec la température. On a déterminé que l'intervalle d'augmentation de température qui réduisait de moitié le temps de réaction se situait entre 8 et 16 °C. A des températures inférieures à 15 °C, les durées de réaction dépassent 120 secondes.

Lorsque les durées sont réduites à moins de 5 secondes (entre 60° et 75 °C), le contrôle de la durée devient difficile, et les réactions risquent de s'emballer: par ailleurs le chauffage des solutions et des pièces est onéreux.

De toute façon, après noircissement les pièces sont lavées, pour éliminer les traces de solution, séchées, puis sont brossées pour éliminer les particules non adhérentes.

On a conduit les essais sur des feuilles de zinc d'essai, ainsi que sur des tôles galvanisées. Les résultats se sont avérés être semblables, aucune influence favorable ou défavorable du substrat d'acier ne se manifestant de façon significative. L'équivalence du zinc massif et de l'acier galvanisé vis-à-vis de solutions prévues pour déplacer du cuivre par du zinc était d'ailleurs hautement probable pour un homme du métier.

Il a été vérifié également que les solutions donnaient des recouvrements noirs sur des zincs alliés, tels que le zamak®, dans lesquels les éléments alliants sont ajoutés au zinc pour en modifier certaines propriétés physiques, sans pour autant masquer les propriétés chimiques, et notamment déplacer de façon significative le potentiel d'oxydoréduction.

On a vérifié par ailleurs que le revêtement noir ne s'altérait pas sensiblement dans les conditions d'emploi comme panneau solaire. Notamment un essai de 1 000 heures à 135 °C n'a fait apparaître aucune dégradation mesurable du coefficient d'absorption.

Sous l'aspect de la résistance à la corrosion, on notera que le revêtement noir est poreux, de sorte qu'en présence d'humidité le zinc sous-jacent est susceptible de s'oxyder, la corrosion se manifestant par l'apparition de taches blanchâtres. Mais il est fréquent que les panneaux solaires présentent un vitrage pour favoriser l'effet dit «de serre», le vitrage étant transparent aux infrarouges rayonnés par le soleil, et opaque aux infrarouges longs correspondant à la température du panneau. Le vitrage permet de constituer un caisson étanche où la corrosion par humidité n'est pas à craindre. En l'absence de caisson vitré, il est recommandé de faire subir au revêtement et au zinc sous-jacent un traitement de passivation, ou de recouvrir le revêtement d'un vernis protecteur, ou analogue.

On comprendra que le cadre de la présente invention, qui vise l'élaboration d'un revêtement noir sur du zinc, ne saurait être restreint à l'utilisation de ces revêtements noirs comme surfaces absorbantes de panneaux solaires, même si les propriétés du revêtement recherchées lors de la mise au point du procédé étaient spécialement adaptées à l'application du revêtement obtenu par ce procédé.

### Revendications

1. Procédé d'élaboration d'un revêtement noir sur au moins une face de pièces métalliques, notamment panneaux, cette face étant formée de zinc pur ou allié, caractérisé en ce qu'on forme un revêtement noir à base de cuivre et de phosphate en mettant en contact ladite face, à une température comprise entre l'ambiante et 75 °C et pendant une durée comprise entre 120 et 5 secondes, avec une solution aqueuse contenant de 3 à 25 g/l d'ions cuivriques, de 5 à 25 g/l d'ions zinc, de 1 à 20 g/l d'ions nickel, de 15 à 40 g/l d'ions orthophosphoriques et éventuellement des anions non susceptibles de former des sels insolubles avec les ions métalliques précités, le pH de la solution étant compris entre 1,6 et 3,0, et on nettoie la pièce après la fin de la durée de contact.

2. Procédé suivant la revendication 1, caractérisé en ce que le nettoyage de la pièce comprend un lavage à l'eau, un séchage et un brossage.

3. Procédé suivant la revendication 1 ou la revendication 2, caractérisé en ce que durée et température de contact sont choisies dans les intervalles précités et déduites des limites de ces intervalles par une relation telle que la durée est réduite de moitié pour une élévation de température de 8 à 16 °C.

4. Procédé suivant une quelconque des revendications 1 à 3, caractérisé en ce que ladite solution contient 5 à 18 g/l d'ions cuivriques, 8 à 9,5 g/l d'ions zinc, 4 à 8,5 g/l d'ions nickel, et 20 à 30 g/l d'ions orthophosphoriques, le pH étant de 1,8 à 2,4.

5. Procédé suivant la revendication 4, caractérisé en ce que la solution contient de 11 à 14 g/l d'ions cuivriques et de 6,5 à 8,5 g/l d'ions nickel, le pH étant compris entre 1,8 et 2,2.

### Claims

1. Process for preparing a black coating on at least one face of metal parts, in particular panels, this face being composed of pure zinc or zinc alloy, characterized in that a black coating based on copper and phosphate is formed by bringing the said face into contact, at a temperature of between room temperature and 75 °C and for a period of between 120 and 5 seconds, with an aqueous solution containing from 3 to 25 g/l of cupric ions, from 5 to 25 g/l of zinc ions, from 1 to 20 g/l of nickel ions, from 15 to 40 g/l of orthophosphoric ions and, where appropriate, anions not capable of forming insoluble salts with the abovementioned metal ions, the pH of the solution being between 1.6 and 3.0, and the part is cleaned after the end of the contact period.

2. Process according to Claim 1, characterized in that the cleaning of the part comprises washing with water, drying and brushing.

3. Process according to Claim 1 or Claim 2, characterized in that the contact period and temperature are chosen within the abovementioned ranges and deduced from the limits of these ranges by a relationship such that the duration is reduced by one half for a temperature rise of 8 to 16 °C.

4. Process according to any one of Claims 1 to 3, characterized in that the said solution contains 5 to 18 g/l of cupric ions, 8 to 9.5 g/l of zinc ions, 4 to 8.5 g/l of nickel ions and 20 to 30 g/l of orthophosphoric ions, the pH being from 1.8 to 2.4.

5. Process according to Claim 4, characterized in that the solution contains from 11 to 14 g/l of cupric ions and from 6.5 to 8.5 g/l of nickel ions, the pH being between 1.8 and 2.2.

### Patentansprüche

1. Verfahren zur Herstellung eines schwarzen Überzuges auf zumindest einer Oberfläche von Metallteilen, insbesondere Blechen, wobei diese Oberfläche aus Reinzink oder Zinklegierung gebildet ist, dadurch gekennzeichnet, dass man einen schwarzen Überzug auf der Basis von Kupfer und Phosphat bildet, indem man diese Oberfläche bei einer Temperatur zwischen Umgebungstemperatur und 75 °C und während einer Zeitdauer zwischen 120 und 5 sec mit einer wässrigen Lösung in Kontakt bringt, die 3 bis 25 g/l Kupfer(III)-Ionen, 5 bis 25 g/l Zinkionen, 1 bis 20 g/l Nickelionen, 15 bis 40 g/l Orthophosphorsäureionen und ggfs. Anionen enthält, die nicht zur Bildung von unlöslichen Salzen mit den vorgenannten Metallionen neigen, wobei das pH der Lösung zwischen 1,6 und 3,0 gehalten wird und man das Teil nach Beendigung der Kontaktdauer reinigt.

2. Verfahren nach Anspruch 1, dadurch gekennzeichnet, dass die Reinigung des Teils eine Spülung mit Wasser, Trocknen und Bürsten umfasst.

3. Verfahren nach Anspruch 1 oder 2, dadurch gekennzeichnet, dass die Dauer und Temperatur des Kontaktes innerhalb der vorerwähnten Bereiche gewählt und von den Grenzen dieser Bereiche durch eine Beziehung abgeleitet werden, dass für eine Temperaturerhöhung von 8 bis 16 °C die Dauer um die Hälfte erniedrigt wird.

4. Verfahren nach einem der Ansprüche 1 bis 3, dadurch gekennzeichnet, dass die Lösung 5 bis 18 g/l Kupfer(III)-Ionen, 8 bis 9,5 g/l Zinkionen, 4 bis 8,5 g/l Nickelionen und 20 bis 30 g/l Orthophosphorsäureionen enthält, wobei das pH 1,8 bis 2,4 beträgt.

5. Verfahren nach Anspruch 4, dadurch gekennzeichnet, dass die Lösung 11 bis 14 g/l Kupfer(III)-Ionen und 6,5 bis 8,5 g/l Nickelionen enthält, wobei das pH zwischen 1,8 und 2,2 liegt.